# EUROPÄISCHE PATENTSCHRIFT

(11) **EP 1 189 979 B1**
(45) Veröffentlichungstag und Bekanntmachung des Hinweises auf die Patenterteilung: **23.04.2003**
(21) Anmeldenummer: 00949188.7
(22) Anmeldetag: 15.06.2000
(51) Int. Cl.: C08J 11/08, C08L 23/00

(54) **VERFAHREN ZUR TRENNUNG VON POLYOLEFINISCHEN KUNSTSTOFFGEMISCHEN**
METHOD OF SEPARATING POLYOLEFINIC SYNTHETIC MIXTURES
PROCEDE DE SEPARATION DE MATIERES PLASTIQUES POLYOLEFINIQUES MELANGEES

(30) Priorität: 16.06.1999 DE 19927523
(43) Veröffentlichungstag der Anmeldung: 27.03.2002
(73) Patentinhaber: Der Grüne Punkt-Duales System Deutschland Aktiengesellschaft, 51145 Köln (DE)
(72) Erfinder: LINDNER, Wolfgang, 41359 Dormagen (DE)
(74) Vertreter: Tönhardt, Marion, Dr.
(86) Internationale Anmeldenummer: EP0005523
(87) Internationale Veröffentlichungsnummer: WO00077082

(56) Entgegenhaltungen:
- DE-A- 2 516 562
- DE-A- 2 536 780
- US-A- 5 198 471

## Beschreibung

Die Erfindung betrifft ein Verfahren zum Trennen von Kunststoffgemischen nach dem Oberbegriff von Anspruch 1. Die Erfindung eignet sich insbesondere zur Trennung von Mischkunststoffen aus der Sammlung des Dualen System Deutschland (Der Grüne Punkt), also von Kunststoffabfallgemischen.

In der US-A-5,198,471 wird ein Verfahren zur Trennung von Polymeren aus einem physikalischen Gemenge fester, unterschiedlicher Kunststoffe beschrieben. Dabei wird das Gemenge in einem Lösungsmittel bei einer ersten niedrigen Temperatur in einem Lösungskessel suspendiert, bei der ein erster Kunststofftyp in Lösung geht und die weiteren Kunststofftypen weiterhin fest bleiben. Nach einer gewissen Lösezeit wird die erhaltene Lösung aus dem Kessel abgezogen. Es wird frisches Lösungsmittel zugegeben, das eine Temperatur hat, bei der der nächste Kunststofftyp des Gemenges gelöst wird. Diese Lösungsschritte werden so weiter fortgeführt, bis alle Kunststoffarten in Lösung übergangen sind. Die Kunststofftypen werden anschließend aus den jeweiligen, abgetrennten Lösungen über die industriell übliche Flash-Verdampfungstechnik zurückgewonnen. Die Lösungszeit beträgt bei diesem Verfahren für jeden Lösezyklus jeweils mindestens eine Stunde, wobei über die Aufheizzeiten und die Lösungsabsaugzeiten in diesem Patent keine Angaben gemacht sind. Diese Zeiten liegen jedoch erfahrungsgemäß pro Lösungszyklus mindestens in der gleichen Größenordnung.

Das bedeutet, daß bei einer industriellen Umsetzung dieses Verfahrens die Durchsatzleistung eines Trennkessels für den Fall, daß das Kunststoffgemenge 3 Kunststofftypen enthält, nur 1/3 desjenigen Kessels ist, bei dem das Kunststoffgemenge sofort zu 100% in Lösung gebracht wird.

Darüber hinaus hat dieses Verfahren den Nachteil, daß es pro Kunststoffkomponente einen großen Zwischenlagertank benötigt, damit die Kunststoffaufbereitung am Ende des Prozesses kontinuierlich ablaufen kann.

Weiter hat dieses Verfahren den Nachteil, daß beim Austragen der verschiedenen Lösungen aus dem Lösungsreaktor (Kessel) immer eine relativ hohe Restlösungsmenge zurückbleibt, die um so größer ist, je kleiner das zugeführte Kunststoffgemenge (zur Verkürzung der Lösezeit) gemahlen worden ist. Diese Restlösung enthält gelösten Kunststoff der zuvor gelösten Kunststofftypen und verunreinigt so die folgenden Kunststofflösungen und damit Kunststoffarten. Um diesen Nachteil zu vermeiden, muß das verbleibende Restgemenge mit frischen Lösungsmittel gewaschen werden, was den Nachteil hat, daß es zusätzlichen Zeitaufwand verursacht und eine zusätzliche Lösungsmittelaufbereitung notwendig macht.

Zusätzlich hat dieses Verfahren den Nachteil, daß beim Lösungsaustrag der ersten Lösungen zusammen mit der Lösung immer auch feinkörnige, feste Kunststoffteilchen der noch nicht gelösten Kunststofftypen ausgetragen werden, die bei einer Flash-Verdampfung in der Aufbereitungsstufe unweigerlich im neu gewonnenen Kunststoff als Verunreinigung auftauchen, wenn nicht vor der Weiterverarbeitung eine Lösungsfiltration zwischengeschaltet wird. Um hier keine zusätzliche Verunreinigung zu erhalten, müßte man in einer industriellen Anlage pro Kunststofftyp des Gemenges, also pro Lösungstyp, eine separate Filtration einrichten. Die gewonnenen Feststoffe müßten mit Lösemittel als Suspension wieder in den Lösekessel zurückgeführt werden.

Es wird deutlich, daß das die industrielle Umsetzung des Verfahrens der US-A-5,198,471 wegen der hierfür notwendigen Investitionen sehr teuer sein wird, und aus diesem Grunde ist bisher in der Praxis noch keine Umsetzung einer industriellen Anlage erfolgt.

Die EP 0 790 277 A1 beschreibt ein Verfahren zum Sortieren von Polymeren, bei dem das Kunststoffgemenge nacheinander in verschiedenen Lösungsmitteln, und zwar Toluol, THF, Xylol und Ethylbenzol, bei Raumtemperatur bzw. bei 135°C suspendiert wird, um die Kunststofftypen PS, PVC und Polyolefine in Lösung zu bringen und einzeln wiederzugewinnen. Dabei wird der Kunststoff aus der Lösung über Fällung mit Methanol gewonnen. Um die einzelnen Polyolefinkomponenten wiederzugewinnen, wurde das Gemenge beim Lösen in Xylol nicht bei der einzelnen Temperatur von 135 °C behandelt, sondern bei den Temperaturen 75°C (LDPE-Lösetemperatur), 105°C (Rest-LDPE und HDPE) und 118°C (PP-Lösungstemperatur). Dieses Verfahren hat neben den bereits oben erläuterten Nachteilen der US-A-5,198,471 noch den Nachteil der unterschiedlichen Lösungsmittel innerhalb derselben Anlage, die sich in Teilen vermischen und daher bei der industriellen Realisierung des Verfahrens eine aufwendige Lösungsmittelaufbereitung notwendig machen.

Bei allen der beschriebenen Verfahren des Standes der Technik wird sich bei Verwendung eines polyolefinsichen Gemenges aus LDPE, HDPE und PP als Ausgangsstoff aufgrund der verschiedenen Verschmutzungsquellen immer ein LDPE oder HDPE-Blend ergeben, bei dem der PP-Gehalt > 5% ist, bzw. ein PP-Blend mit einem HDPE-Gehalt > 5%.

In vielen Anwendungsfällen ist jedoch ein Polypropylenanteil ≥ 5 Gew.-% in HDPE schädlich, weil Polypropylen in Polyethylen nicht löslich ist und bei steigendem Polypropylenanteil deshalb dies Polymerblend versprödet, d.h. die Kerbschlagzähigkeit stark absinkt und die Schweißnahtfestigkeit verloren geht sowie die Spannungsrißkorrisionsanfälligkeit zunimmt.

In der DE 198 06 355 A1, die nach dem Prioritätstag des vorliegenden Patentes veröffentlicht ist, wird ein thermisches Trennverfahren für vermischte Polymere beschrieben, in dem durch Temperaturerhöhung zwei flüssige Phasen erzeugt werden, von denen eine reicher an Lösungsmittel und die zweite reicher an Polymeren ist. Insbesondere wird in einer ersten Phasentrennstufe eine polyethylenreiche Phase gebildet, und in einer zweiten Phasentrennstufe wird diese in eine LDPE-reiche Phase und eine HDPE-reiche Phase getrennt.

Nach dieser Phasenbildung besteht die Aufgabe der Phasentrennung darin, die Tröpfchen der beiden Phasen in "geschlossenen" Phasen zu vereinigen. Diese Phasentrennung ist in der Praxis nur schwer realisierbar.

Anschließend müssen bei diesem Verfahren noch die Polymere aus der jeweiligen Lösung gewonnen werden. Die Wiedergewinnung der Polymere aus den Lösungen ist in der DE 198 06 355 A1 nicht beschrieben.

Bei dem aus der US-A-5,198,471 bekannten Trennverfahren mittels Flash-Verdampfung und anschließender Vakuumextrusion ergibt sich der Nachteil, daß die in dem Kunststoffabfallgemisch vorhandenen unterschiedlichen Zusätze, wie Wachse, Antistatika und Stabilisatoren, in unbekannter Menge in den gewonnenen Polymeren zurückbleiben. Gewinnt man das Polymer durch Absenken der Temperatur und Fällung/Kristallisation aus der Lösung, bleiben in der Regel bei richtiger Wahl der Fällungstemperatur der überwiegende Anteil der Wachse, Polymerkettenbruchstücke und Zusätze in der Lösung; ein restlicher Teil fällt jedoch in unbekannter Menge mit dem Polymer aus.

Ferner entsteht bei einfacher Temperaturabsenkung ein wesentliches Qualitätsproblem dadurch, daß das Polymer in feinster Pulverform ausfällt, so daß nach der anschließenden Filtrierung der Filterkuchen ca. 50% bis 60% Restfeuchte enthält.

In dieser hohen Restfeuchte sind wieder in proportionalen Anteilen die oben beschriebenen unerwünschten Zuschlagstoffe enthalten, welche die Qualität des Polymerblends beeinträchtigen. Bei einem Polymergemisch, das aus Kunststoffabfällen gewonnen wird, ergibt sich zudem das Problem, daß sich vercrackte Farbstoffe von Verpackungen in den beteiligten Polymerphasen anreichern können. Im Falle einer polyolefinischen Mischung sammeln sich diese in der ersten Phasentrennstufe in der polyethylenreichen Phase, während die Polypropylenphase relativ rein bleibt; in der zweiten Stufe - bei der Trennung von LDPE und HDPE - konzentrieren sie sich in der HDPE-reichen Phase.

Es ist daher eine Aufgabe der Erfindung, ein Verfahren anzugeben, das die oben beschriebenen Nachteile bei der Gewinnung von Polymeren aus einem mehrsortigen Kunststoffgemenge vermeidet. Ziel ist die Gewinnung von Polymerblends mit einer Reinheit größer 95%, vorzugsweise größer 97%, bei Ausgangsmaterialien, welche Gemische aus Kunststofftypen enthalten, die nicht miteinander verträglich sind (z.B. PP und HDPE);
- die Gewinnung von Polymerblends mit möglichst geringem Wachs- und Additivgehalt, welche aus den verwendeten Ausgangsmaterialien herrühren;
- die Gewinnung von Polymerblends mit hoher Reproduzierbarkeit der Anteile der Kunststofftypen zur Sicherstellung konstanter technologischer Eigenschaften; und
- eine möglichst einfache Technologie mit hoher Ausbeute.

Diese Aufgabe wird durch ein Verfahren mit den Merkmalen von Anspruch 1 gelöst.

Die Erfindung schlägt ein Verfahren zum Trennen von Kunststoffgemischen vor, bei dem als Ausgangsstoff eine polyolefine Kunststoffraktion oder eine andere Kunststoffmischung verwendet wird. Der Ausgangsstoff wird mit einem Lösungsmittel in Verbindung gebracht, und die Temperatur der Lösung sowie vorzugsweise auch das Verhältnis aus Lösungsmittel und Kunststoffmenge werden so eingestellt, daß sich wenigstens ein Polymertyp, vorzugsweise möglichst viele der Polymertypen, des Kunststoffgemenges lösen und die Lösung insgesamt eine für die anschließende Fest-Flüssig-Trennung ausreichend niedrige Viskosität hat. Der wenigstens eine gelöste Polymertyp wird anschließend aus der Lösung unter Scherung ausgefällt, um den Polymertyp von sämtlichen anderen Bestandteilen der Lösung, einschließlich der weiteren darin enthaltenen Polymertypen zu trennen.

Zur Trennung der jeweiligen Polymertypen durchläuft die Lösung jeweils ein- oder mehrstufige Fällungsstufen. Jede Fällungsstufe kann mehrere Abkühlstufen umfassen, um die Lösung zunächst auf eine Transporttemperatur abzukühlen, bei der kein Polymer ausfällt, und im die Lösung anschließend in der nachfolgenden bzw. letzten Abkühlstufe auf eine Fälltemperatur abzukühlen, bei der jeweils ein bestimmter Polymertyp unter Scherung ausgefällt wird.

Vorzugsweise wird die Lösung über so viele Fällungsstufen geführt, wie sie gelöste Polymertypen enthält, wobei in jeder Fällungsstufe die Lösung in jeweils einen Polymertyp sowie das Lösungsmittel mit den gelösten verbleibenden Polymertypen, Polymerbruchstücken, Wachsen, Additiven, Farbstoffen und Restunlöslichkeiten zerlegt wird. Der ausgefällte Polymertyp wird aus der Suspension getrennt, die ihrerseits der nächsten Fällungsstufe zugeführt wird und so weiter, bis alle gesuchten Polymertypen ausgefällt sind.

Bei Untersuchung des erfindungsgemäßen Verfahrens hat sich gezeigt, daß eine besonders gute Trennung der Bestandteile des Kunststoffgemisches und besonders reine Endprodukte erhalten werden, wenn in einer ersten Fällstufe zwei Polymertypen gemeinsam, nämlich Polypropylen und HD-PE unter Scherung ausgefällt werden, die HD-PE-/PP-Fasern mittels Fest-Flüssig-Trennung aus der verbleibenden LD-PE-Lösung getrennt und anschließend das LD-PE aus der LD-PE einerseits auf herkömmliche Weise zurückgewonnen wird und die PP-. und HD-PP-Fasern andererseits auf herkömmliche Art getrennt werden.

Bei dieser sowie anderen Ausführungsformen der Erfindung können eine oder mehrere der Scher-Fällungsstufen des Gesamtprozesses durch eine Trennstufe für einen oder mehrere der zu trennenden Polymertypen ersetzt werden, in der eine Trennung des betreffenden Polymertyps in der flüssigen Phase unter Ausnutzung einer Mischungslücke durchführt wird. Dabei werden ähnlich wie in dem oben erläuterten Verfahren der DE 198 06 355 A1 z.B. zwei flüssige Phasen gebildet, die jeweils eine erhöhte Konzentration verschiedener Polymertypen enthalten, und diese flüssigen Phasen werden in einer Trennflasche, Zentrifuge oder einem Koaleszenzabscheider getrennt, wobei erfindungsgemäß die dabei entstehende, abgetrennte flüssige Polymerblendlösung in einer zusätzlichen Fällungsstufe über Scherfällung oder Scherkristallisation aufbereitet werden kann.

Diese alternative Ausführungsform, bei der eine Fällungsstufe für einen bestimmten Polymertyp durch eine Trennstufe unter Bildung von mehreren flüssigen Phasen ersetzt wird, kann aus prozeßtechnischer Sicht günstig sein. wie unten noch genauer erläutert ist.

Obwohl die Fällung von Polymeren aus Lösung unter Schereinwirkung aus dem Stand der Technik grundsätzlich bekannt ist, um fasrige Strukturen herzustellen (siehe z.B. die DE-A-196 18 330), wurde dieses Verfahren doch noch nie zur Trennung von mehreren Polymertypen aus einem Kunststoffgemisch und insbesondere aus einem Kunststoffabfallgemisch eingesetzt. Bei der Erfindung hat sich jedoch überraschend gezeigt, daß die Trennung von Polymeren mittels Scherfällung eine Faserstruktur mit einer sehr geringen Restfeuchte und einer großen Reinheit ergibt, die den Produkten überlegen ist, welche mit den herkömmlichen Verfahren erhalten werden.

Vorzugsweise wird die Lösung vor der Trennung der gelösten Polymertypen in einer ein-oder mehrstufigen mechanischen Fest-Flüssig-Trenneinrichtung weitgehend von anorganischen Verschmutzungen, Zuschlagstoffen, Farbstoffen, ungelösten Kunststoffen und dergleichen gereinigt. Nach der Trennung der verschiedenen Polymertypen werden die einzelnen Polymertypen als Polymerblend mittels einer Fest-Flüssig-Trenntechnik in entsprechenden Waschstufen nachgereinigt und z.B. durch nachgeschaltete Entgasungsextrusion oder Vakuumtrocknung mit nachgeschalteter Extrusion zurückgewonnen. Die im Lösungsmittel gelösten niedermolekularen Polymerbruchstücke und Wachse werden mittels Destillation aus der Lösung in einem separaten Lösungsmittel-Aufbereitungskreislauf zurückgewonnen und können bei entsprechender Aufbereitung als Wachse abgesetzt werden.

Weitere Merkmale und Vorteile der Erfindung sind in den abhängigen Ansprüche angegeben.

Die Erfindung ist im folgenden anhand bevorzugter Ausführungsformen mit Bezug auf die Zeichnung näher erläutert. In den Figuren zeigt:
- Fig. 1: eine schematische Darstellung einer Anlage zur Durchführung des erfindungsgemäßen Verfahrens;
- Fig. 2: eine vergrößerte Darstellung einer möglichen Ausführungsart eines Scherkopfes, der in der in Fig. 1 gezeigten Anlage verwendet werden kann;
- Fig. 3: eine alternative Ausführungsform eines Scherkopfs, der in der in Fig. 1 gezeigten Anlage verwendet werden kann;
- Fig. 4: eine schematische Darstellung einer anderen Ausführungsform einer Anlage zur Durchführung des erfindungsgemäßen Verfahrens;
- Fig. 5: ein Ablaufdiagramm zur Erläuterung des erfindungsgemäßen Verfahrens; und
- Fig. 6: ein Ablaufdiagramm zur Erläuterung einer modifizierten Ausführungsform des erfindungsgemäßen Verfahrens; und
- Fig. 7: ein Ablaufdiagramm zur Erläuterung noch einer weiteren Ausführungsform des erfindungsgemäßen Verfahrens.

Das erfindungsgemäße Verfahren ist im folgenden in bezug auf die Aufbereitung von Mischkunststoffen des Dualen System Deutschland beschrieben, insbesondere in bezug auf die die Trennung der polyolefinen Anteile der Mischkunststoffraktion. Die Erfindung ist jedoch in entsprechender Weise auf alle anderen Arten von Kunststoffmischungen anwendbar.

Der polyolefinische Anteil der Mischkunststoffraktion aus der Sammlung des Dualen System Deutschland (Der Grüne Punkt) besteht insgesamt aus etwa 20 bis 30% Polypropylen und etwa 35 bis 55% LDPE und HDPE aus Verpackungen in wechselnden Mengenanteilen. Bei den bisher erfaßten Mengen wurden dabei HDPE-Anteile zwischen 15 und 35 Gew.-% und LDPE-Anteile zwischen 10 und 35 Gew.-% ermittelt.

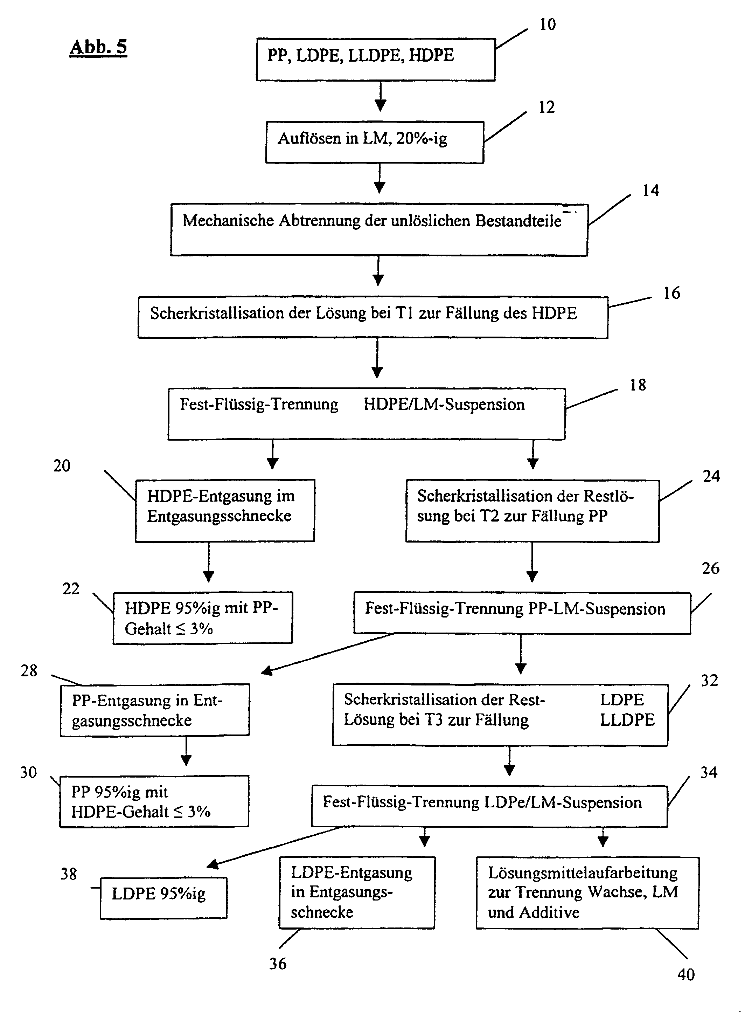

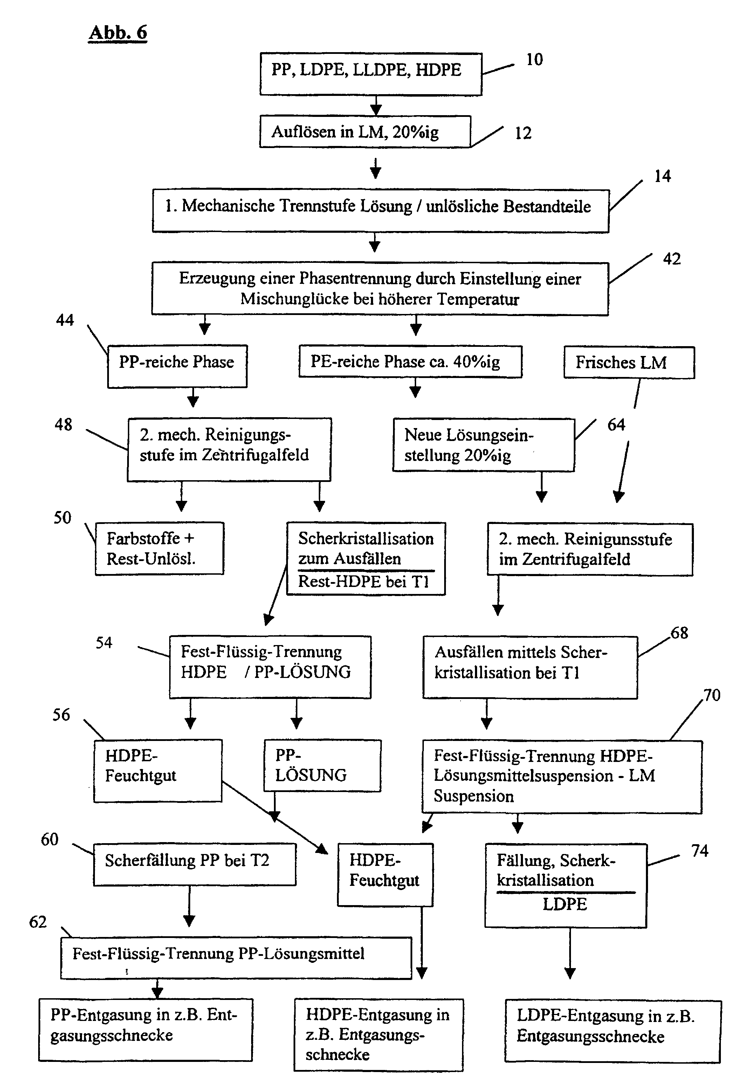

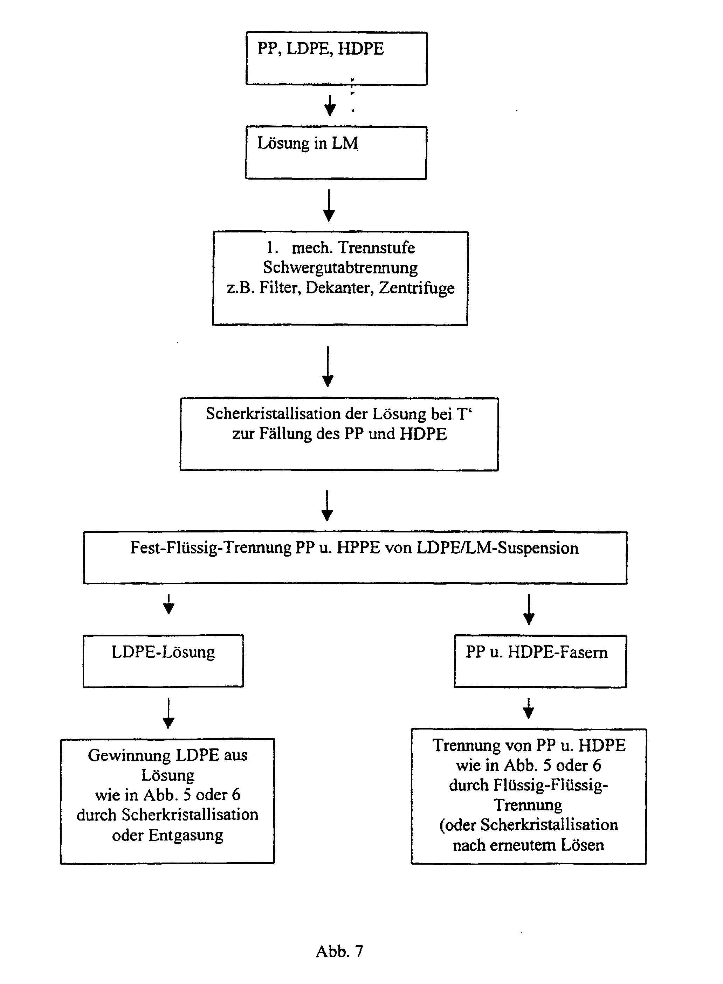

Eine bevorzugte Ausführungsform der Erfindung ist in Fig. 5 dargestellt. Bei dem erfindungsgemäßen Verfahren, dessen Ablauf schematisch in Fig. 5 wiedergegeben ist, wird als Ausgangsstoff eine Mischung aus PP, LDPE, LLDPE und HDPE verwendet, siehe Schritt 10. Dieser Ausgangsstoff wird mit einem Lösungsmittel, wie Testbenzin oder N-Hexan, in Verbindung gebracht und bei erhöhten Temperaturen, z.B. etwa 140°C, vollständig gelöst, siehe Schritt 12. Anstelle von Testbenzin oder N-Hexan können als Lösungsmittel beispielsweise auch Dekalin oder Xylol verwendet werden. Ein günstiger Wert für die Einstellung der Polymerkonzentration in dem Lösungsmittel liegt bei etwa 20%. Anschließend wird die Lösung mittels Filtration, Zentrifugieren oder andere mechanische Trennungstechniken in einer oder mehreren Stufen von den unlöslichen Bestandteilen gereinigt, siehe Schritt 14. Diese unlöslichen Bestandteile sind bei den hier speziell betrachteten gebrauchten Kunststoffverkaufsverpackungen in der Regel anorganische Restverschmutzungen, ungelöste Zelluloseanteile, PVC-, PET- oder PS-Verpackungsmaterialien, Papierfasern, nicht-polyolefinische Verpackungen und anorganische Füllstoffe und dergleichen. Nach diesem mechanischen Reinigungsschritt besteht die Lösung zu 99% oder mehr aus dem Lösungsmittel und den gelösten polyolefinischen Kunststoffen PP, HDPE, LDPE und LLDPE (die im folgenden zu LDPE zusammengefaßt sind).

Gemäß der ersten Ausführungsform der Erfindung, die in Fig. 5 dargestellt ist, werden im folgenden die einzelnen Polymertypen über Kristallisation unter gleichzeitiger Schereinwirkung nacheinander aus der Lösung gefällt, um die einzelnen Polymertypen zu trennen und Wachse, Polymerkettenbruchstücke und möglichst viele Farb- und Füllstoffe in der Lösung zu halten. Hierzu wird die im Schritt 14 gereinigte Lösung nacheinander bei drei verschiedenen Fälltemperaturen, welche empirisch ermittelt werden, unter Scherung gefällt. In einer ersten Fällungsstufe, die im Schritt 16 dargestellt ist, wird die Lösung auf eine Temperatur T1 abgekühlt, und HDPE wird unter Scherung ausgefällt. In einer Fest-Flüssig-Trennstufe wird das HDPE aus der Lösung getrennt, so daß für die weiteren Verarbeitungsschritte ausgefälltes, faserförmiges HDPE einerseits und die HDPE-Restlösung andererseits getrennt vorliegen, siehe Schritt 18.

Das faserförmige, ausgefällte HDPE wird im Schritt 20 in einer Entgasungsschnecke entgast, so daß sich im Schritt 22 ein Polymerblend mit einem HDPE-Gehalt von 95% und einem PP-Gehalt ≤ 3% ergibt.

Die nach der Abtrennung des HDPE verbleibende Suspension wird auf eine zweite, niedrigere Fälltemperatur T2 abgekühlt, um PP unter Scherung auszufällen, siehe Schritt 24. Ähnlich wie im Schritt 18 wird dann im Schritt 26 die Lösung mit den ausgefällten PP-Fasern einer Fest-Flüssig-Trennung unterzogen, so daß man die PP-Fasern einerseits und die Restsuspension, aus der das PP ausgefiltert wurde, andererseits erhält, siehe Schritt 26.

Das ausgefällte PP wird wiederum in einer Entgasungsschnecke entgast, siehe Schritt 28, so daß sich ein Polymerblend mit einem PP-Gehalt von 95% und einem HDPE-Gehalt ≤ 3% ergibt, siehe Schritt 30.

Die nach der Abtrennung des PP verbleibende Suspension wird nun in einer dritten Stufe auf eine dritte, nochmals niedrigere Fälltemperatur T3 abgekühlt, um unter Scherung das LDPE auszufällen, siehe Schritt 32. Die Lösung mit dem ausgefällten LDPE wird einer Fest-Flüssig-Trennung unterzogen, siehe Schritt 34, und die daraus gewonnenen LDPE-Fasern werden in einer Entgasungsschnecke entgast, siehe Schritt 36, wodurch sich ein Polymerblend ergibt, das zu etwa 95% LDPE enthält. Das zurückbleibende Lösungsmittel wird im Schritt 40 aufgearbeitet, um das Lösungsmittel von Wachsen, Zusätzen und anderen Verunreinigungen zu reinigen.

Fig. 5 stellt lediglich die Grundzüge der Erfindung dar, welche in ihrer konkreten Ausgestaltung zahlreiche Modifikationen und Verfeinerungen erfahren kann.

Bei der Fällung unter Scherung muß berücksichtigt werden, daß die Wahl des eingesetzten Lösungsmittels und der Schergeschwindigkeit die genaue Lage der Ausfälltemperaturen der einzelnen Polymertypen stark beeinflussen. Es muß darauf geachtet werden, daß die Ausfälltemperaturen für die verschiedenen Polymertypen ausreichend weit auseinander liegen, damit eine eindeutige Trennung der Polymertypen sichergestellt werden kann. Im Fall der hier betrachteten polyolefinischen Kunststoffraktion aus LDPE, HDPE und PP hat sich überraschend ergeben, daß das Trennverfahren durch Kristallisation unter gleichzeitiger Scherung eine bessere Trennung der Kunststoffraktion in die einzelnen Komponenten ermöglicht als das selektive Löseverfahren der oben beschriebenen US-A-5,198,471, wie man der folgenden Tabelle leicht entnehmen kann:

| Lösungsmittel | Lösetemperatur bei dem Verfahren der US 5,198,471 (°C) | | | Fälltemperatur bei dem erfindungsgemäßen Verfahren (°C) | | |
|---|---|---|---|---|---|---|
| | LDPE. | HDPE | PP | LDPE | HDPE | PP |
| Testbenzin | 70-75 | 96-103 | 100-113 | 67-70 | 95-100 | 78-86 |
| Dekalin | 80-90 | 115-130 | 130-140 | 50-60 | 90-100 | 70-80 |
| n-Hexan | >100 | >100 | >100 | 70-80 | 100-110 | 80-110 |

Aus der obigen Tabelle wird deutlich, daß sich bei dem selektiven Löseverfahren der US-A-5,198,471 die Temperaturbereiche für das Lösen von HDPE und PP überschneiden, so daß eine selektive Lösung praktisch nicht möglich ist. Dagegen haben die Fälltemperaturbereiche für die verschiedenen Polymertypen HDPE und PP bei dem erfindungsgemäßen Verfahren einen Abstand von ca. 9 bis 10 °C, während die Fälltemperaturbereiche für die Polymertypen PP und LDPE für die hier betrachteten Lösungsmittel einen Abstand von etwa 8 bis 9 °C haben.

Nicht nur hat sich bei der Erfindung ergeben, daß eine vollständige Trennung der Fälltemperaturbereiche für die einzelnen Polymertypen möglich ist, wodurch erst eine wirkliche selektive Trennung der Polymertypen realisiert werden kann, sondern im Gegensatz zu dem Löseverfahren des Standes der Technik, bei dem die Lösetemperatur des PP oberhalb derjenigen des HDPE liegt, sind die Fälltemperaturen für PP bei den hier verwendeten Lösungsmitteln, Testbenzin und Dekalin, niedriger als diejenigen des HDPE. Im Gegensatz zum Stand der Technik ist somit mit dem erfindungsgemäßen Verfahren der Kristallisation unter Scherung nicht nur eine wesentlich bessere selektive Trennung der verschiedenen Polymertypen eines Kunststoffgemisches möglich, sondern diese Trennung erfolgt auch in ganz anderen Temperaturbereichen und in einer anderen Reihenfolge als beim Stand der Technik.

Bei der erfindungsgemäßen Fällung unter Scherung erhält man ein Polymerpulver, dessen Struktur faserartig ist, wobei diese Fasern eine shishkebab-artige Gestalt haben können. Durch diese Faserstruktur, die sich bei der Kristallisation einstellt, ergibt sich der weitere Vorteil, daß das abgetrennte Polymer nach der Filtration (Fest-Flüssig-Trennung in den Schritten 18, 26 bzw. 34) eine sehr geringe Restfeuchte hat, die sogar unterhalb von 10 Gew.-% liegen kann. Korrespondierend zu dieser niedrigen Restfeuchte ist auch der Anteil der Wachse und sonstigen Zuschlagsstoffe in dem gewonnenen Polymerpulver sehr gering, also die Reinheit des gewonnen Polymerpulvers hoch, wobei der Anteil der restlichen Wachse, Zuschlagstoffe und dergleichen durch einfache Wäsche des Polymerpulvers mit reinem Lösungsmittel und Filtrierung des entstehenden Blends weiter reduziert werden können.

Nach den bisherigen Erkenntnissen beeinflussen die Menge und Art der Wachse und weiteren Zusatzstoffen in dem Kunststoffgemisch sowie die Molekulargewichtsverteilung der einzelnen Polymertypen die genaue Lage und das Verhältnis der einzelnen Fälltemperaturbereiche zueinander und somit die Trennschärfe bzw. die Reinheit, mit der die einzelnen Polymertypen voneinander getrennt und wiedergewonnen werden können, nur wenig. Wesentlich entscheidendere Faktoren sind die Wahl des Lösungsmittels, der Temperatursteuerung und der Schergeschwindigkeit sowie deren Verteilung.

Eine Variante des erfindungsgemäßen Verfahrens ist schematisch in dem Ablaufdiagramm der Fig. 6 gezeigt.

Grundsätzlich ist es möglich, wie in Fig. 5 dargestellt, die einzelnen Polymertypen nach und nach durch die hintereinander geschalteten Fällungsstufen unter Scherung auszufällen und somit zu trennen; aus prozeßtechnischer Sicht kann es jedoch wegen der Verschmutzung der Polymere in dem Ausgangsmaterial mit verschiedenen Farbstoffen, Pigmenten und dergleichen günstiger sein, das beschriebene Verfahren zu modifizieren. Bei einer alternativen Ausführungsform der Erfindung, die in Fig. 6 dargestellt ist, wird daher vorgeschlagen, zunächst das Polypropylen mit einem anderen Verfahren aus dem Kunststoffgemenge aus PP, HDPE und LDPE zu lösen und erst anschließend die verbleibenden beiden PE-Typen, LDPE und HDPE, über Scherfällung zu trennen. Hierzu eignet sich das in der DE 198 06 355 A1 beschriebene Verfahren.

Der Erfinder hat nämlich erkannt, daß bei der Trennung der PP-Phase von den PE-Phasen über Löslichkeitslücken bei höherer Temperatur die Farbstoffe und Pigmente sich in der PE-Phase ansammeln, so daß eine fast reine PP-Phase entsteht. Sollen also nicht nur die einzelnen Polymer- oder Polyolefintypen mit möglichst hoher Polymerreinheit aus einer Kunststoffraktion getrennt werden, sondern auch mit einer möglichst hohen Reinheit von Farbstoffen, Pigmenten und dergleichen, dann schlägt die Erfindung in Abwandlung des in Fig. 5 dargestellten Verfahrens ein zweistufiges Trennverfahren vor.

In der ersten Stufe dieses Verfahrens laufen zunächst die Schritte 10 bis 14 wie oben mit Bezug auf Fig. 5 beschrieben ab. Im Schritt 42 wird die Lösung auf eine solche Temperatur eingestellt, daß sich eine Phasentrennung aufgrund einer Mischungslücke bei höher Temperatur ergibt. Dieses Verfahren ist ausführlicher in der DE 198 06 355 A1 beschrieben, auf die Bezug genommen wird.

Bei Verwendung z.B. des Lösungsmittels N-Hexan wird im Schritt 42 die Lösung, welche z.B. eine Polymerkonzentration von 20 Gew.-% enthalten kann, auf eine Temperatur größer als 170°C, vorzugsweise zwischen 180°C und 210°C aufgeheizt. Bei dieser Temperatur setzt sich im oberen Teil einer dem Lösekessel nachgeschalteten Trennflasche nach etwa 40 Minuten eine polypropylenreiche Phase ab, die einfach abgezogen werden kann, siehe Schritt 44, wobei der Überdruck des Lösungsmittels Hexan die hierzu notwendige Treibkraft liefert. Die abgezogene PP-reiche Lösung oder Phase enthält neben dem Polymer Polypropylen noch geringe Anteile LDPE und HDPE, insgesamt etwa 4,7% bei Verwendung eines Kunststoffgemischs von etwa 51% PP, 43% LDPE und 16% HDPE als Ausgangsstoff, sowie Wachse und andere Additive (etwa 1,6% bei Verwendung des obengenannten Gemisches als Ausgangsstoff). In der unteren Phase erhält man bei demselben Kunststoffgemisch als Ausgangsstoff ein Polymerblend mit etwa 3,2% PP und 37,1% LDPE und HDPE sowie etwa 1,5% Wachse und andere Zusätze, siehe Schritt 46.

Bei dieser Abwandlung des erfindungsgemäßen Verfahrens wird nun die im Schritt 44 erhaltene polypropylenreiche Phase zunächst mechanisch mittels Zentrifugieren, Filtrieren oder dergleichen gereinigt, siehe Schritt 48, um Farbstoffe und Restunlöslichkeit zu entfernen, siehe Schritt 50. Die gereinigte polypropylenreiche Phase wird vorzugsweise nicht, wie beim Stand der Technik, über Flashverdampfung und nachgeschaltete Entgasungsextrusion zurückgewonnen, sondern gemäß der Erfindung mittels Scherfällung weiterverarbeitet, so daß die in der Lösung noch enthaltenen Polymertypen als Polymerpulver mit einer Shishkebab-Faserstruktur ausfallen.

Bei dem in Fig. 6 gezeigten Ausführungsbeispiel wird die gereinigte, PP-reiche Phase zunächst auf die erste Fälltemperatur T1 abgekühlt, um unter Scherung das restliche HDPE in der Lösung auszufällen, siehe Schritt 52. Die so erhaltene Suspension wird im Schritt 54 mit einem Fest-Flüssig-Trennverfahren in die HDPE-Fasern (HDPE-Feuchtgut), siehe Schritt 56, und das PP-reiche Lösungsmittel, siehe Schritt 58, getrennt.

Die bei der Fest-Flüssig-Trennung des Schritts 54 erhaltene PP-reiche Lösung wird auf eine zweite Fälltemperatur T2 abgekühlt, bei der unter Scherung Polypropylen ausgefällt wird, siehe Schritt 60. Die dabei entstehende Suspension wird wiederum in einer Fest-Flüssig-Trennstufe in ihre Bestandteile Polypropylen und Lösungsmittel aufgeteilt. siehe Schritt 62.

Die oben beschriebenen Schritte 52 bis 62 zur Trennung von HDPE und PP durch Scherfällung bei den Fälltemperaturen T1 bzw. T2 entsprechen im wesentlichen den Schritten 16 bis 26 des in Fig. 5 dargestellten Verfahrensablaufs. Die bei der Fest-Flüssig-Trennung in den Schritten 54 bzw. 62 erhaltenen HDPE- bzw. PP-Fasern werden ebenso wie bei dem in Fig. 5 dargestellten Verfahren anschließend noch einer Entgasung in einer Entgasungsschnecke unterzogen, um dem Polymerpulver die Restfeuchte zu entziehen.

Auch die bei der Phasentrennung in Schritt 42 gewonnene polyethylenreiche Phase wird im wesentlichen wie schon mit Bezug auf Fig. 5 beschrieben weiterverarbeitet. Zunächst wird die polyethylenreiche Phase 46 erneut mit Lösungsmittel angreichert, um wieder einen etwa 20%-igen Polymeranteil in dem Lösungsmittel herzustellen. Zur Abtrennung von Farbstoffen, Restunlöslichkeiten und dergleichen wird die im Schritt 64 erzeugte Lösung im Schritt 66 unter Zugabe von frischem Lösungsmittel einer weiteren mechanischen Reinigung, z.B. mittels Zentrifugieren, unterzogen. Die gereinigte Lösung wird im Schritt 68 auf die erste Fälltemperatur T1 abgekühlt, und unter Scherung fällt HDPE aus. Die Suspension mit den HDPE-Fasern wird im Schritt 70 getrennt, wobei man HDPE-Fasern 72 einerseits und eine Restlösung andererseits erhält, welche im Schritt 74 auf die dritte Temperatur T3 abgekühlt wird, um unter Scherung LDPE auszufällen. Diese zuletzt beschriebenen Schritte entsprechen im wesentlichen den Schritten 16 und 18 sowie 32 des mit Bezug auf Fig. 5 beschriebenen Verfahrens. Bei der Scherfällung des Schrittes 74 erhaltene LDPE-Suspension wird dann ähnlich wie in den Schritten 34 bis 40 der Fig. 5 weiterverarbeitet. Den Schritten 56 bzw. 72 aus Fig. 6 folgen Verfahrensschritte, die den Schritten 20 und 22 in Fig. 5 entsprechen, und dem Verfahrensschritt 62 in Fig. 6 folgen den Schritten 26 bis 30 aus Fig. 5 entsprechende Verfahrensschritte. Oder anders gesagt, das modifizierte Verfahren, das in Fig. 6 dargestellt ist, läuft grundsätzlich wie das Verfahren der Fig. 5 ab, abgesehen davon, daß die Ausgangslösung zunächst in eine PP-reiche Phase und eine HDPE-reiche Phase aufgetrennt wird.

Neben der ausgezeichneten Selektivität des erfindungsgemäßen Verfahrens zum Trennen der verschiedenen Polymertypen hat sich, wie bereits erläutert, gezeigt, daß mit dem erfindungsgemäßen Verfahren die Restfeuchte der Polymerfasern unter 10% gehalten werden kann und nicht, wie beim Stand der Technik etwa 60 Gew.-% beträgt. Um die Produktreinheit zu erhöhen, können die gewonnen Polymerfasern (Filterkuchen) mit reinem Lösungsmittel gewaschen und wieder entfeuchtet werden; da dies ein Verfahren des Standes der Technik ist, wird es hier nicht weiter erläutert. Wegen der mit dem erfindungsgemäßen Verfahren deutlich verbesserten Entfeuchtung und größeren Reinheit der unter Schereinwirkung gefällten Polymere kann bei der Erfindung jedoch auf diesen zusätzlichen Waschvorgang verzichtet werden, weil insbesondere in den gewonnenen Polymerblends nur minimale Fremdpolymermengen enthalten sind.

Das abgewandelte Verfahren, das in Abbildung 6 dargestellt ist und bei dem, allgemein gesprochen, die Abtrennung wenigstens eines bestimmten Polymertyps statt durch Scherfällung durch Phasentrennung erfolgt, hat den zusätzlichen Vorteil, daß der größte Teil der Farbstoffe und anderen Verunreinigungen bei der Phasentrennung in der PE-reichen Phase bleibt, während die PP-reiche Phase weitgehend frei von solchen Verunreinigungen ist.

Ein weiterer besonderer Aspekt des erfindungsgemäßen Verfahrens besteht darin, daß die Fällungskristallisation zweistufig erfolgt, wobei die Lösung zunächst auf eine möglichst niedrige, aber sichere Transporttemperatur abgekühlt wird, bei der sicher kein Polymer ausfällt und die Scherfällung dann bei einer vorgegebenen Fälltemperatur erfolgt, um mit geringerem Energieaufwand und bei präzise einstellbaren Fälltemperaturen die Trennung der Polymertypen vorzunehmen.

Fig. 7 zeigt nochmals eine Modifikation des erfindungsgemäßen Verfahrens zum Trennen polyolefinischer Kunststoffgemische.

Untersuchungen an dem erfindungsgemäßen Verfahren, die jedoch erst vorläufige Ergebnisse liefern konnten, haben gezeigt, daß zumindest bei der Scherfällung mittels MIG-Rührer in einem Kessel (wie weiter unten noch beschrieben ist) bei solchen Scherraten, bei denen die Fälltemperaturen der einzelnen Polymerarten, HDPE, PP, und LDPE, gemäß der obigen Tabelle in der entsprechenden Reihenfolge bei etwa 100°C, 80°C und 75°C liegen, nicht unter allen Bedingungen Kunststoffpulver anfällt, welches leicht abfiltriert werden könnte, sondern das sich Gele bilden können, die hoch lösungsmittelhaltig und schwer weiterzuverarbeiten sind. Um eine solche Gelbildung zu verhindern, müssen höhere Scherraten gewählt werden, bei denen die Fälltemperaturen von PP und HDPE jedoch so nah beieinander liegen, daß Ihre Trennung in Polymerblends mit sehr hoher (größer gleich 95%) Reinheit nur schwer möglich ist. Für den Fall der Gelbildung wird daher in diesen Fällen ein alternatives Trennverfahren gemäß Figur 7 vorgeschlagen, daß im folgenden mit Bezug auf Figur 7 erläutert ist.

Bei der in Figur 7 gezeigten Ausführungsform wird zunächst das Kunststoffausgangsmaterial, das insbesondere PP, LDPE und HDPE enthält, wie bei den zuvor beschriebenen Ausführungen des erfindungsgemäßen Verfahrens gelöst. In einer ersten mechanischen Trennungsstufe, die einen Filter, Dekanter, eine Zentrifuge oder dergleichen aufweisen kann, werden unlösliche Bestandteile, Schwergut und dergleichen abgetrennt.

Dann wird die Lösung wie bei der Ausführungsform der Figur 5 in eine erste Fällstufe geführt, und bei einer Fälltemperatur von etwa 60-70°C werden Polypropylen und HDPE gemeinsam unter Scheren ausgefällt, so daß nur das LDPE in der Lösung gelöst bleibt. Dadurch entsteht eine LDPE-Lösung mit PP-/HDPE-Faser darin, die mittels einer Fest-Flüssig-Trennung getrennt werden können.

Die Restlösung, die als Hauptbestandteil nur noch gelöstes LDPE enthält, kann auf herkömmliche Weise weiterverarbeitet werden, um das LDPE daraus zu gewinnen, insbesondere durch Entgasung oder Schwerkristallisation, wie in den Figuren 5 oder 6 gezeigt.

Die PP- und HDPE-Fasern werden anschließend ebenfalls wie beispielsweise in den Figuren 5 oder 6 beschrieben getrennt, d.h. beispielsweise durch eine Flüssig-Flüssig-Trennung gemäß der DE 198 06 355 A1 oder durch Scherkristallisation, wie oben beschrieben.

Die übrigen Schritte der Entgasung, Lösungsmittelaufarbeitung, Abtrennung von Wachsen, Lösungsmitteln, Additive etc. können wie oben beschrieben durchgeführt werden.

Die Ausführungsform der Figur 7 hat, wie bereits erläutert, den Vorteil, daß unter allen bisher bekannten Prozeßbedingungen die Gelbildung durch höhere Scherraten verhindert werden kann, wobei dann die gemeinsam ausgefällten Bestandteile PP und HDPE vorzugsweise durch Flüssig-Flüssig-Trennung voneinander getrennt werden. Hierzu werden die Fasern bei etwa 140°C erneut gelöst und anschließend bei etwa 170-200°C in einer Zentrifuge getrennt.

Das beschriebene Verfahren arbeitet zuverlässig und ergibt Polymerblends hoher Reinheit.

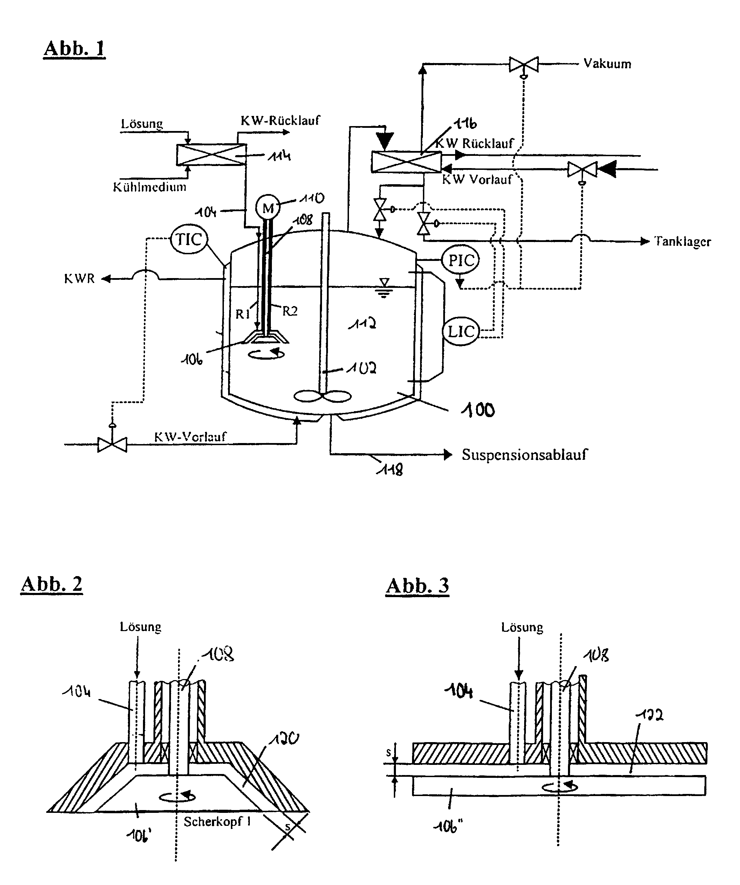

Fig. 1 zeigt einen Fällungskessel, mit dem das erfindungsgemäße Verfahren durchgeführt werden kann.

Fig. 1 zeigt den Fällkessel 100 mit einer Rühreinrichtung 102, die in einer Ausführungsform aus einem MIG-Rührer besteht, einer Zuführleitung 104 für Lösungsmittel und einem Scherkopf 106, der über eine Antriebswelle 108 und einen Motor 110 angetrieben wird. In dem Fällkessel 100 befindet sich eine Suspension oder Lösung 112 aus Lösungsmittel, Polymeren, gelösten Wachsen und Polymerbruchstücken sowie Reststoffen. Die Lösung wird über einen ersten Wärmetauscher 114 zugeführt, der einen Zu- und einen Ablauf für das Kühlmedium aufweist. Ein zweiter Wärmetauscher 116 dient zur Einstellung einer vorgegebenen, konstanten Temperatur im Fällkessel 100. Dieser zweite Wärmetauscher 116 ist vorzugsweise ein Brüdenkondensator mit druckgeführter Kühlwassermengenregelung und Anschluß an ein Vakuumsystem sein.

Die Arbeitsweise des in Fig. 1 gezeigten Fällkessels ist im folgenden beispielhaft für die Trennung von PP aus einer polypropylenreichen Lösung mit Testbenzin als Lösungsmittel beschrieben. Dieselbe Anordnung kann jedoch selbstverständlich bei geeigneter Wahl der Parameter, insbesondere der Temperatur und der Schergeschwindigkeit, für die Trennung jedes Polymertyps mit jedem geeigneten Lösungsmittel verwendet werden.

Im vorliegenden Beispiel wird eine polypropylenreiche Lösung, die eine Temperatur größer gleich 170°C aufweist, mit Testbenzin als Lösungsmittel, über den ersten Wärmetauscher 114 geführt und in einer ersten Verfahrensstufe auf eine Temperatur abgekühlt, die etwas oberhalb der ersten Fälltemperatur liegt, als z.B. auf etwa 130°C, so daß kein Kunststoffpolymer ausfällt und den Wärmetauscher 114 verstopft. Die auf diese Temperatur abgekühlte Lösung wird über das Rohr 104 unter den Flüssigkeitspegel der Suspension 112 gefördert. Das Rohr 104 mündet in einer Ausführungsform offen im unteren Bereich des Kessels, in einer anderen Ausführungsvariante bei dem Scherkopf 106, wobei zwei verschiedene Ausführungsformen des Scherkopfes in den Fig. 2 und 3 dargestellt sind.

In beiden Figuren erkennt man, daß das Rohr 104 an einem Scherspalt 120 bzw. 122 des Scherkopfes 106' bzw. 106" mündet. Dieser Scherspalt 120 bzw. 122 kann konisch oder flach abgebildet sein, wie man in den Fig. 2 und 3 sieht. Der Scherkopf 106, 106', 106" kann sowohl eine glatte als auch eine strukturierte Oberfläche aufweisen, wobei sich als Oberflächenstruktur eine schneckenstegartige Ausbildung anbietet, um das gefällte Polymerpulver sicher aus dem Spalt 120, 122 herauszutransportieren.

Die auf etwa 130°C vorgekühlte Lösung kühlt bei diesem zweistufigen Verfahren beim Austritt aus dem Rohr 104 und Eintritt in den Fällkessel 105 schlagartig auf die eingestellte Fälltemperatur ab, die für die Fällungskristallisation der polypropylenreichen Lösung mit dem Lösungsmittel Testbenzin zwischen etwa 78°C und 86°C liegt.

Die mit der Lösung in den Fällkessel 100 eingetragene zusätzliche Wärme wird mittels Brüdenverdampfung über den zweiten Wärmetauscher 116 aus dem System abgeführt, wodurch sichergestellt wird, daß in dem Fällkessel 100 stets die vorgegebene konstante Temperatur für die Fällkristallisation des gewünschten Polymertyps mit ausreichender Genauigkeit von ± 2°C auch im großtechnischen Maßstab eingehalten wird. Diese Genauigkeit wird dabei dadurch erreicht, daß zur Temperaturregelung als Führungsgröße der Kesseldruck verwendet wird, der in diesem System im thermodynamischen Gleichgewicht mit der Flüssigkeitstemperatur steht. Bei Temperaturen, die unterhalb der Siedetemperatur des Lösungsmittels bei Normaldruck liegen, wird deshalb zur Siedekühlung der entsprechende Unterdruck mit Hilfe von Vakuumpumpen erzeugt.

Wenn in dem Zuführrohr 104 ein ausreichend großer Überdruck im Verhältnis zu dem Druck der Suspension in dem Fällkessel 100 erzeugt werden kann, kann die erfindungsgemäße Scherung auch durch eine entsprechend gestaltete Düse (nicht gezeigt) am Ende des Rohres 104 erzeugt werden, so daß die Lösung beim Eintritt in den Fällkessel 100 die gewünschte Schergeschwindigkeit besitzt. Der in der Zeichnung dargestellte Scherkopf 106 kann dann weggelassen werden.

In Fig. 1 ist noch ein Suspensionsablauf 118 dargestellt, über den die Suspension mit dem ausgefällten Polymertyp für die Fest-Flüssig-Trennung abgezogen werden kann.

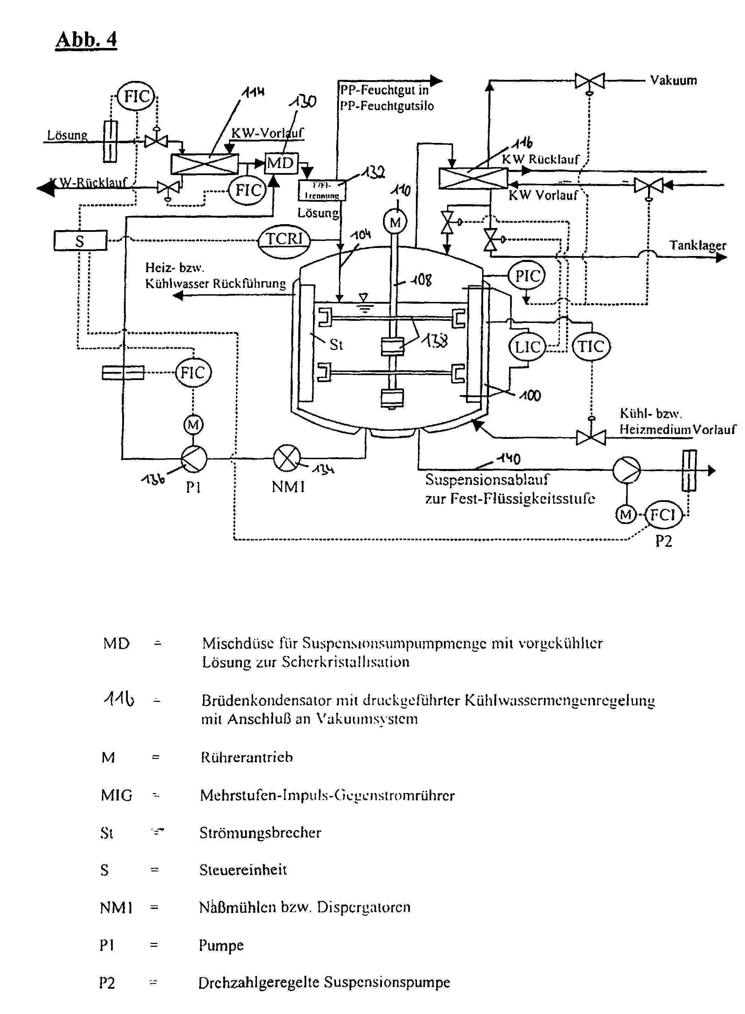

Fig. 4 zeigt eine weitere Ausführungsform des Fällkessels zur Realisierung des erfindungsgemäßen Verfahrens, wobei entsprechende Komponenten mit den gleichen Bezugszeichen bezeichnet sind. Grundsätzlich ist der Fällkessel ähnlich wie in Fig. 1 aufgebaut, wobei der Lösungszuführung über das Rohr 104 noch eine Mischdüse 130 und eine Fest-Flüssig-Trennstufe 132 vorgeschaltet sind. Bei dieser Ausführungsvariante wird ein Teil der Suspension in dem Fällkessel 100 über eine Naßmühle 134 und eine Pumpe 136 der Mischdüse 130 zugeführt und mit einer etwa gleich großen Menge der über den Wärmetauscher 114 zugeführten Lösung in der Mischdüse 130 unter Scherung durchmischt. Der Vorteil dieser weiteren Ausführungsform wird anhand des folgenden Beispiels deutlich werden.

Im Wärmetauscher 114 wird eine polypropylenreiche Lösung zugeführt, die dort auf beispielsweise 114°C abgekühlt und an die Mischdüse 130 weitergeleitet wird. Eine gleich große Suspensionsmenge aus dem Fällkessel 100, die eine Temperatur von etwa 78°C hat, wird ebenfalls zur Mischdüse 130 geführt, so daß sich in der Mischdüse eine Mischtemperatur von ca. 96°C einstellt. Als Lösungsmittel wird Testbenzin verwendet. Da, wie oben erläutert, bei Verwendung von Testbenzin als Lösungsmittel HDPE im Temperaturbereich von 95 bis 100°C ausfällt und die Mischdüse 130 (die auch als Dispergator ausgebildet sein kann) eine Scherwirkung erzeugt, fällt das restliche HDPE in der PP-reichen Lösung in der Mischdüse 130 unter Scherung aus und kann über die Fest-Flüssig-Trennstufe 132 aus der PP-reichen Lösung herausgetrennt werden, bevor diese zur Fällung in den Fällkessel 100 dosiert wird.

Diese Maßnahme hat mehrere Vorteile. Zunächst kann der Temperaturunterschied zwischen der Suspension in dem Fällkessel 100 und der über den Wärmetauscher 114 zugeführten Lösung ausgenutzt werden, um in einer Vorstufe, nämlich in der Mischdüse 130, Rest-HDPE aus der Lösung zu trennen, und zusätzlich erleichtert die dabei entstehende nochmalige Vor-Kühlung der Lösung, bevor diese in den Fällkessel 100 gelangt, das Konstanthalten der Temperatur in dem Fällkessel 100, weil weniger große Temperaturunterschiede ausgeglichen werden müssen.

In dem Fällkessel 100 selbst wird über den zweiten Wärmetauscher 116 mittels Brüdenverdampfung die Temperatur dann leicht bis auf eine Genauigkeit von ± 2°C konstant auf der unteren Fälltemperatur von 78°C für PP gehalten. Die Überschußwärme kann über das Kondensatorkühlwasser abgekühlt werden.

Bei dem in Fig. 4 gezeigten Ausführungsbeispiel kann im Fällkessel 100 die gewünschte Scherung mit Hilfe von MIG-Rührerarmen 138 eingestellt werden. Die in dem Fällkessel 100 erzeugte Suspension wird entweder über die Naßmühle 134 und die Pumpe 136 zur Mischdüse 130 zurückgeführt, oder über den Suspensionsablauf 140 einer Fest-Flüssig-Trennstufe zugeführt werden.

Die in der vorstehenden Beschreibung, den Ansprüche und den Figuren offenbarten Merkmale können sowohl einzeln als auch in beliebiger Kombination für die Verwirklichung der Erfindung in den verschiedenen Ausgestaltungen von Bedeutung sein.

## Patentansprüche

1. Verfahren zum Trennen von Kunststoffgemischen, mit einer polyolefinen Kunststofffraktion oder einer Kunststoffmischung als Ausgangsstoff, bei dem
der Ausgangsstoff mit einem Lösungsmittel in Verbindung gebracht und die Temperatur des Lösungsmittel-Kunststoffgemisches so eingestellt wird, daß sich eine Lösung mit wenigstens einem gelösten Polymertyp bildet, **dadurch gekennzeichnet, daß** der gelöste Polymertyp aus der Lösung unter Scherung ausgefällt wird, um den Polymertyp von anderen Bestandteilen der Lösung zu trennen.

2. Verfahren nach Anspruch 1, **dadurch gekennzeichnet, daß** die Lösung über wenigstens eine Fällungsstufe geführt wird, die mehrere Abkühlstufen umfaßt, wobei die Lösung in einer ersten Abkühlstufe auf eine Transporttemperatur abgekühlt wird, bei der kein Polymer ausfällt, und in einer nachgeschalteten Abkühlstufe unter Schereinwirkung auf eine Fälltemperatur abgekühlt wird, bei der die Lösung in den Polymertyp und das Lösungsmittel mit darin enthaltenen Reststoffen zerlegt wird.

3. Verfahren nach einem der vorangehenden Ansprüche, **dadurch gekennzeichnet, daß** die Temperatur und das Verhältnis des Lösungsmittel-Kunststoffgemisches so eingestellt werden, daß in der Lösung mehrere Polymertypen gelöst werden.

4. Verfahren nach einem der vorangehenden Ansprüche, **dadurch gekennzeichnet, daß** die Temperatur der Lösung so eingestellt wird, daß sich wenigstens 2 flüssige Phasen bilden, die jeweils wenigstens einen Polymertyp in erhöhter Konzentration enthalten.

5. Verfahren nach Anspruch 4, **dadurch gekennzeichnet, daß** die beiden Phasen getrennt werden.

6. Verfahren nach einem der Anspruch 5, **dadurch gekennzeichnet, daß** aus wenigstens einer der beiden getrennten Phasen der Polymertyp, der darin in erhöhter Konzentration enthalten ist, unter Scherung ausgefällt wird.

7. Verfahren nach einem der Ansprüche 4 bis 6, **dadurch gekennzeichnet, daß** die Temperatur der Lösung so eingestellt wird, daß sich wenigstens eine obere und eine untere flüssige Phase bilden, wobei die obere Phase eine erhöhte Polypropylenkonzentration und die untere Phase eine erhöhte Polyethylenkonzentration aufweist.

8. Verfahren nach einem der Ansprüche 4 bis 7, **dadurch gekennzeichnet, daß** die Bildung und Trennung der wenigstens zwei flüssigen Phasen erfolgt, bevor oder nachdem wenigstens ein Polymertyp aus der Lösung unter Scherung ausgefällt wird.

9. Verfahren nach einem der vorangehenden Ansprüche, **dadurch gekennzeichnet, daß** die Lösung über mehrere Fällstufen geführt wird, die jeweils eine Fälltemperatur haben, bei der jeweils einer der Polymertypen ausfällt.

10. Verfahren nach Anspruch 9, **dadurch gekennzeichnet, daß** die Anzahl der Fällstufen der Anzahl der gelösten Polymertypen entspricht.

11. Verfahren nach Anspruch 10, **dadurch gekennzeichnet, daß** die Lösung in einer ersten Fällstufe auf eine erste Fälltemperatur abgekühlt wird, bei der im wesentlichen nur ein erster Polymertyp ausfällt, dieser erste Polymertyp aus der Lösung getrennt wird, und die verbleibende Lösung in einer zweiten und gegebenenfalls in einer dritten Fällstufe auf eine zweite bzw. eine dritten niedrigere Fälltemperatur abgekühlt wird, bei der wenigstens ein zweiter bzw. ein dritter Polymertyp ausfällt.

12. Verfahren nach Anspruch 11, **dadurch gekennzeichnet, daß** der erste Polymertyp im wesentlichen HDPE, der zweite Polymertyp im wesentlichen PP und der dritte Polymertyp im wesentlichen LDPE ist.

13. Verfahren nach Anspruch 11, **dadurch gekennzeichnet, daß** der erste Polymertyp im wesentlichen PP, der zweite Polymertyp im wesentlichen HDPE und der dritte Polymertyp im wesentlichen LDPE ist.

14. Verfahren nach Anspruch 11, 12 oder 13, **dadurch gekennzeichnet, daß** nach dem Ausfällen jeweils eines Polymertyps, eine Fest - Flüssigtrennung der dabei entstehenden Suspension durchgeführt wird und die Restlösung der nächsten Fällstufe zugeordnet wird.

15. Verfahren nach Anspruch 7, **dadurch gekennzeichnet, daß** die Temperatur der Lösung in einer Zentrifuge so eingestellt wird, daß sich eine obere und eine untere flüssige Phase bilden, die derart getrennt werden können.

16. Verfahren nach Anspruch 15, **dadurch gekennzeichnet, daß** die polypropylenreiche Phase einer ersten Fällstufe zugeführt wird und bei einer ersten Fälltemperatur das PP unter Scherung ausgefällt wird; die polyethylenreiche Phase einer zweiten Fällstufe zugeführt wird und bei einer zweiten Fälltemperatur das HDPE unter Scherung ausgefällt wird, das HDPE aus der Lösung isoliert wird, und anschließend in einer dritten Fällstufe das LDPE bei einer dritten Fälltemperatur, die niedriger ist als die zweite Fälltemperatur, unter Scherung ausgefällt wird.

17. Verfahren nach einem der Ansprüche 1 bis 8, **dadurch gekennzeichnet, daß** das gelöste Polypropylen und HDPE bei einer Fälltemperatur unter Scherung aus der Lösung ausgefällt werden.

18. Verfahren nach Anspruch 17, **dadurch gekennzeichnet, daß** eine Fest/Flüssig-Trennung der dabei entstehenden Suspension zur Trennung des PP und des HDPE aus der Lösung durchgeführt wird.

19. Verfahren nach Anspruch 18, **dadurch gekennzeichnet, daß** LDPE aus der Restlösung, insbesondere durch Scherung oder Lösungsmittel-Verdampfung, gewonnen wird.

20. Verfahren nach einem der Ansprüche 17-19, **dadurch gekennzeichnet, daß** das PP und das HDPE erneut gelöst und getrennt werden.

21. Verfahren nach einem der Ansprüche 4 - 20, **dadurch gekennzeichnet, daß** die Polymertypen in den flüssigen Phasen unter Ausnutzung einer Mischungslücke in einer Trennflasche einer Zentrifuge oder einem Koaleszenzabscheider getrennt werden.

22. Verfahren nach einem der vorangehenden Ansprüche, **dadurch gekennzeichnet, daß** die Lösung vor der Scherfällung in einer Fest-Flüssig-Trennstufe weitgehend von Verschmutzungen, Zuschlagstoffen, Farbstoffen, ungelösten Kunststoffen, Schwergut und der gleichen gereinigt wird.

23. Verfahren nach einem der vorangehenden Ansprüche, **dadurch gekennzeichnet, daß** die einzelnen Polymertypen, die aus der Lösung gefällt wurden, als Polymerblend mittels Fest-Flüssig-Trennung in wenigstens einer Waschstufe nachgereinigt werden.

24. Verfahren nach einem der vorangehenden Ansprüche, **dadurch gekennzeichnet, daß** die einzelnen Polymertypen mittels nachgeschalteter Entgasungssextrusion zurückgewonnen werden.

25. Verfahren nach einem der vorangehenden Ansprüche, **dadurch gekennzeichnet, daß** in der Lösung gelöste niedermolekulare Polymerbruchstücke und Wachse mittels Destillation der Lösung zurückgewonnen werden.

26. Verfahren nach einem der vorangehenden Ansprüche, **dadurch gekennzeichnet, daß** die Lösung von unlöslichen Stoffen mechanisch gereinigt wird.

27. Verfahren nach einem der vorangehenden Ansprüche, **dadurch gekennzeichnet, daß** ein mit Fremdpolymeren verunreinigtes Polymerblend in frischem Lösungsmittel gelöst und bei der Fälltemperatur unter Scherung gefällt wird.

28. Verfahren nach einem der vorangehenden Ansprüche, **dadurch gekennzeichnet, daß** nach einer Nachreinigung die einzelnen Polymerblends nochmals gelöst und durch herkömmliche Fällung mit einem organischen Fällmittel als Pulver mit einem gewünschten Kornspektrum eingestellt werden.

29. Verfahren nach einem der Ansprüche, **dadurch gekennzeichnet, daß** ein organisches Lösungsmittel verwendet wird.

30. Verfahren nach einem der vorangehenden Ansprüche, **dadurch gekennzeichnet, daß** als Lösungsmittel Testbenzin, Hexan, Dekalin oder Xylol verwendet wird.

31. Verfahren nach einem der vorangehenden Ansprüche, **dadurch gekennzeichnet, daß** die Lösetemperatur für das Lösungsmittel-Kunststoffgemisch größer als 100°C ist, insbesondere bei etwa 120°C-180°C liegt.

32. Verfahren nach einem der vorangehenden Ansprüche, **dadurch gekennzeichnet, daß** eine erste Fälltemperatur zwischen 85-130°C, eine zweite, niedrigere Fälltemperatur im Bereich 70-105°C und eine dritte Fälltemperatur zwischen 50 und 80°C liegt, wobei die Fällstufen so eingestellt werden, daß der Abstand zwischen den jeweiligen Fälltemperaturbereichen mindestens 2°C beträgt, bevorzugt 5°C.

33. Verfahren nach einem der vorangehenden Ansprüche, **dadurch gekennzeichnet, daß** zur Scherfällung die Lösung in einen Scherspalt einer Fäll-Schereinrichtung, die in einem Fällkessel angeordnet ist, geleitet wird.

34. Verfahren nach einem der vorangehenden Ansprüche, **dadurch gekennzeichnet, daß** zur Scherfällung die Lösung in einen Fällkessel mit einer MIG-Rührvorrichtung eingeleitet wird, welche Rührerarme mit einem ausreichenden Schergefälle aufweist, um ein faseriges Produkt zu erzeugen.

35. Verfahren nach einem der vorangehenden Ansprüche, **dadurch gekennzeichnet, daß** für die Scherfällung eine ausreichende, abgekühlte Lösungs- oder Suspensionsmenge aus einem Fällkessel in eine externe Schervorrichtung mit diskontinuierlich oder kontinuierlich verstellbarem Scherspalt und verstellbarer Umfangsgeschwindigkeit geführt wird.

36. Verfahren nach einem der vorangehenden Ansprüche, **dadurch gekennzeichnet, daß** als Ausgangsstoff eine Mischung oder Kombination oder ein Verbund von gebrauchten Kunststoffen mit anderen Kunststoffen verwendet wird.

37. Verfahren nach einem der vorangehenden Ansprüche, **dadurch gekennzeichnet, daß** der Ausgangsstoff zunächst mit einem Vor-Lösungsmittel in Verbindung gebracht, bei einer erhöhten Temperatur und Umgebungsdruck gelöst und von unlöslichen Bestandteilen gereinigt wird, und daß anschließend das Lösungsmittel ausgetauscht wird.

38. Verfahren nach Anspruch 37, **dadurch gekennzeichnet, daß** der gelöste Ausgangsstoff durch Filtration, Dekantieren oder Zentrifugieren gereinigt wird.

39. Verfahren nach einem der vorangehenden Ansprüche, **dadurch gekennzeichnet, daß** vor dem Scherfällen in Polymeren lösliche oder mit diesen gut mischbare Zuschlagstoffe in die Lösung zugegeben werden.

## Claims

1. A method of separating mixtures of plastics, wherein the starting material comprises a polyolefin plastics fraction or a mixture of plastics, in which
the starting material is brought into contact with a solvent and the temperature of the solvent/plastics mixture is so adjusted that a solution containing at least one dissolved polymer type is formed,
**characterised in that** the dissolved polymer type is precipitated out of the solution by shearing in order to separate the polymer type from other constituents of the solution.

2. A method according to claim 1, **characterised in that** the solution undergoes at least one precipitation step which comprises a plurality of cooling steps, the solution in a first cooling step being cooled to a transportation temperature at which no polymer is precipitated, and in a subsequent cooling step being cooled, under shearing action, to a precipitation temperature at which the solution is separated into the polymer type and the solvent with residual substances contained therein.

3. A method according to either one of the preceding claims, **characterised in that** the temperature and the ratio of the solvent/plastics mixture are so adjusted that a plurality of polymer types are dissolved in the solution.

4. A method according to any one of the preceding claims, **characterised in that** the temperature of the solution is so adjusted that at least two liquid phases are formed, each of which contains at least one polymer type in a higher concentration.

5. A method according to claim 4, **characterised in that** the two phases are separated.

6. A method according to claim 5, **characterised in that** in the case of at least one of the two separated phases the polymer type that is contained therein in a higher concentration is precipitated by shearing.

7. A method according to any one of claims 4 to 6, **characterised in that** the temperature of the solution is so adjusted that at least one upper liquid phase and at least one lower liquid phase are formed, the upper phase having a higher concentration of polypropylene and the lower phase having a higher concentration of polyethylene.

8. A method according to any one of claims 4 to 7, **characterised in that** the formation and separation of the at least two liquid phases is carried out before or after at least one polymer type is precipitated out of the solution by shearing.

9. A method according to any one of the preceding claims, **characterised in that** the solution undergoes a plurality of precipitation steps, each of which has a precipitation temperature at which one of the polymer types is precipitated.

10. A method according to claim 9, **characterised in that** the number of precipitation steps corresponds to the number of dissolved polymer types.

11. A method according to claim 10, **characterised in that** the solution is in a first precipitation step cooled to a first precipitation temperature at which essentially only a first polymer type is precipitated, that first polymer type is separated from the solution, and in a second precipitation step and optionally in a third precipitation step the remaining solution is cooled to a second or a third lower precipitation temperature, at which at least a second or a third polymer type is precipitated.

12. A method according to claim 11, **characterised in that** the first polymer type is essentially HDPE, the second polymer type is essentially PP and the third polymer type is essentially LDPE.

13. A method according to claim 11, **characterised in that** the first polymer type is essentially PP, the second polymer type is essentially HDPE and the third polymer type is essentially LDPE.

14. A method according to claim 11, 12 or 13, **characterised in that** after precipitation of one polymer type, the resulting suspension is subjected to solid/liquid separation and the residual solution is supplied to the next precipitation step.

15. A method according to claim 7, **characterised in that** the temperature of the solution is so adjusted in a centrifuge that an upper liquid phase and a lower liquid phase are formed, which can thus be separated.

16. A method according to claim 15, **characterised in that** the polypropylene-rich phase is supplied to a first precipitation step and the PP is precipitated by shearing at a first precipitation temperature; the polyethylene-rich phase is supplied to a second precipitation step and the HDPE is precipitated by shearing at a second precipitation temperature, the HDPE being isolated from the solution, and then in a third precipitation step the LDPE is precipitated by shearing at a third precipitation temperature that is lower than the second precipitation temperature.

17. A method according to any one of claims 1 to 8, **characterised in that** the dissolved polypropylene and HDPE are precipitated out of the solution by shearing at a precipitation temperature.

18. A method according to claim 17, **characterised in that** the resulting suspension is subjected to solid/liquid separation for the separation of the PP and the HDPE from the solution.

19. A method according to claim 18, **characterised in that** LDPE is obtained from the residual solution, especially by shearing or solvent evaporation.

20. A method according to any one of claims 17 to 19, **characterised in that** the PP and the HDPE are again dissolved and separated.

21. A method according to any one of claims 4 to 20, **characterised in that** the polymer types in the liquid phases are separated by exploiting a miscibility gap in a separating flask, a centrifuge or a coalescence separator.

22. A method according to any one of the preceding claims, **characterised in that** the solution, prior to the shear-precipitation, is substantially cleaned of impurities, additives, colorants, undissolved plastics, heavy materials and the like in a solid/liquid separation step.

23. A method according to any one of the preceding claims, **characterised in that** the individual polymer types that have been precipitated out of the solution are subsequently cleaned as a polymer blend by means of solid/liquid separation in at least one washing step.

24. A method according to any one of the preceding claims, **characterised in that** the individual polymer types are recovered by means of subsequent degassing extrusion.

25. A method according to any one of the preceding claims, **characterised in that** low molecular weight polymer fragments and waxes dissolved in the solution are recovered by distillation of the solution.

26. A method according to any one of the preceding claims, **characterised in that** the solution is mechanically cleaned of insoluble materials.

27. A method according to any one of the preceding claims, **characterised in that** a polymer blend that is contaminated by extraneous polymers is dissolved in fresh solvent and is precipitated by shearing at the precipitation temperature.

28. A method according to any one of the preceding claims, **characterised in that** after a subsequent purification step the individual polymer blends are dissolved again and obtained in the form of a powder of the desired particle size range by conventional precipitation with an organic precipitating agent.

29. A method according to any one of the claims, **characterised in that** an organic solvent is used.

30. A method according to any one of the preceding claims, **characterised in that** white spirits, hexane, decalin or xylene is used as solvent.

31. A method according to any one of the preceding claims, **characterised in that** the dissolution temperature for the solvent/plastics mixture is greater than 100°C, especially approximately from 120°C to 180°C.

32. A method according to any one of the preceding claims, **characterised in that** a first precipitation temperature is from 85 to 130°C, a second, lower precipitation temperature is in the range from 70 to 105°C and a third precipitation temperature is from 50 to 80°C, the precipitation steps being so adjusted that the difference between the respective precipitation temperature ranges is at least 2°C, preferably 5°C.

33. A method according to any one of the preceding claims, **characterised in that** for shear-precipitation the solution is passed into a shearing gap of a precipitation shearing device which is arranged in a precipitation vessel.

34. A method according to any one of the preceding claims, **characterised in that** for shear-precipitation the solution is passed into a precipitation vessel having a multi-stage impulse counterflow mixer, which has stirrer arms having a sufficient shear gradient to produce a fibrous product.

35. A method according to any one of the preceding claims, **characterised in that** for the shear-precipitation a sufficient amount of the cooled solution or suspension is passed from a precipitation vessel to an external shearing device having a discontinuously or continuously adjustable shearing gap and adjustable circumferential speed.

36. A method according to any one of the preceding claims, **characterised in that** as starting material there is used a mixture or combination or composite of used plastics with other plastics.

37. A method according to any one of the preceding claims, **characterised in that** the starting material is first brought into contact with a preliminary solvent, dissolved at an elevated temperature and ambient pressure and cleaned of insoluble constituents, and the solvent is then exchanged.

38. A method according to claim 37, **characterised in that** the dissolved starting material is purified by filtration, decanting or centrifuging.

39. A method according to any one of the preceding claims, **characterised in that**, prior to the shear-precipitation, additives that are soluble in or readily miscible with polymers are added to the solution.

## Revendications

1. Procédé de séparation de matières plastiques, comportant une fraction de matières plastiques polyoléfiniques ou des matières plastiques mélangées comme matière de base, dans lequel la matière de base est mise en combinaison avec un solvant et la température du mélange solvant-matières plastiques est réglée de façon qu'une solution se forme avec au moins un type de polymère dissous, **caractérisé en ce que** le type de polymère dissous est précipité de la solution sous cisaillement, pour séparer ce type de polymère des autres composants de la solution.

2. Procédé selon la revendication 1, **caractérisé en ce que** la solution est amenée par au moins un stade de précipitation, qui comprend plusieurs stades de refroidissement, dans lequel la solution est, dans un premier stade de refroidissement, refroidi à une température de transport à laquelle aucun polymère ne précipite et, dans un stade de refroidissement en aval, est refroidie sous cisaillement à une température de précipitation à laquelle la solution est décomposée en ledit type de polymère et en le solvant contenant des matières résiduelles.

3. Procédé selon l'une des revendications précédentes, **caractérisé en ce que** la température et le rapport du mélange solvant-matières plastiques sont réglés de façon que plusieurs types de polymères soient dissous dans la solution.

4. Procédé selon l'une des revendications précédentes, **caractérisé en ce que** la température de la solution est réglée de façon qu'il se forme au moins 2 phases liquides qui contiennent chacune au moins un type de polymère en concentration plus élevée.

5. Procédé selon la revendication 4, **caractérisé en ce que** les deux phases sont séparées.

6. Procédé selon la revendication 5, **caractérisé en ce que** le type de polymère qui est contenu dans celle-ci en concentration plus élevée précipite sous cisaillement d'au moins une des deux phases séparées.

7. Procédé selon l'une des revendications 4 à 6, **caractérisé en ce que** la température de la solution est réglée de façon qu'au moins une phase liquide supérieure et une inférieure se forment, la phase supérieure présentant une concentration plus élevée de polypropylène et la phase inférieure une concentration plus élevée de polyéthylène.

8. Procédé selon l'une des revendications 4 à 7, **caractérisé en ce que** la formation et la séparation des au moins deux phases liquides se produisent avant ou après qu'au moins un type de polymère précipite de la solution sous cisaillement.

9. Procédé selon l'une des revendications précédentes, **caractérisé en ce que** la solution passe par plusieurs stades de précipitation qui ont chacun une température de précipitation à laquelle un des types de polymères précipite.

10. Procédé selon la revendication 9, **caractérisé en ce que** le nombre des stades de précipitation correspond au nombre des types de polymères dissous.

11. Procédé selon la revendication 10, **caractérisé en ce que** la solution est, dans un premier stade de précipitation, refroidie à une première température de précipitation à laquelle pratiquement seul un premier type de polymère précipite, ce premier type de polymère est séparé de la solution et la solution restante est refroidie, dans un deuxième et éventuellement dans un troisième stade de précipitation, à une deuxième ou à une troisième température de précipitation plus basse, à laquelle au moins un deuxième ou un troisième type de polymère précipite.

12. Procédé selon la revendication 11, **caractérisé en ce que** le premier type de polymère est essentiellement du polyéthylène haute densité, le deuxième type de polymère essentiellement du polypropylène et le troisième type de polymère essentiellement du polyéthylène basse densité.

13. Procédé selon la revendication 11, **caractérisé en ce que** le premier type de polymère est essentiellement du polypropylène, le deuxième type de polymère essentiellement du polyéthylène haute densité et le troisième type de polymère essentiellement du polyéthylène basse densité

14. Procédé selon la revendication 11, 12 ou 13, **caractérisé en ce qu'**après la précipitation d'un type de polymère, une séparation solide-liquide de la suspension ainsi obtenue est réalisée et la solution résiduelle est envoyée au stade suivant de précipitation.

15. Procédé selon la revendication 7, **caractérisé en ce que** la température de la solution est réglée dans une centrifugeuse de façon qu'il se forme une phase liquide supérieure et une inférieure qui peuvent être séparées de cette façon.

16. Procédé selon la revendication 15, **caractérisé en ce que** la phase riche en polypropylène est amenée à un premier stade de précipitation et le polypropylène est précipité sous cisaillement à une première température de précipitation, la phase riche en polyéthylène est amenée à un deuxième stade de précipitation et le polyéthylène haute densité est précipité sous cisaillement à une deuxième température de précipitation, le polyéthylène haute densité est isolé de la solution et ensuite, dans un troisième stade de précipitation, le polyéthylène basse densité est précipité à une troisième température de précipitation qui est inférieure à la deuxième température de précipitation.

17. Procédé selon l'une des revendications 1 à 8, **caractérisé en ce que** le polypropylène et le polyéthyiène haute densité dissous sont précipités de la solution à une température de précipitation sous cisaillement.

18. Procédé selon la revendication 17, **caractérisé en ce qu'**une séparation solide/liquide de la suspension ainsi obtenue est réalisée pour séparer le polypropylène et le polyéthylène haute densité de la solution.

19. Procédé selon la revendication 18, **caractérisé en ce que** le polyéthylène basse densité est récupéré de la solution résiduelle, en particulier par cisaillement ou évaporation du solvant.

20. Procédé selon l'une des revendications 17-19, **caractérisé en ce que** le polypropylène et le polyéthylène haute densité sont à nouveau dissous et séparés.

21. Procédé selon l'une des revendications 4-20, **caractérisé en ce que** les types de polymères dans les phases liquides sont séparés en utilisant une lacune de miscibilité dans le ballon de séparation d'une centrifugeuse ou dans un séparateur par coalescence.

22. Procédé selon l'une des revendications précédentes, **caractérisé en ce que**, avant la précipitation sous cisaillement, la solution est, dans un stade de séparation solide-liquide, largement purifiée des contaminants, additifs, colorants, matières plastiques non dissoutes, produits lourds et autres similaires.

23. Procédé selon l'une des revendications précédentes, **caractérisé en ce que** les divers types de polymères qui ont été précipités de la solution sont encore purifiés en tant que mélange de polymères au moyen d'une séparation solide-liquide dans au moins un stade de lavage.

24. Procédé selon l'une des revendications précédentes, **caractérisé en ce que** les divers types de polymères sont récupérés par extrusion avec dégazage en aval.

25. Procédé selon l'une des revendications précédentes, **caractérisé en ce que** les fragments de polymères et cires de faible poids moléculaire dissous dans la solution sont récupérés par distillation de la solution.

26. Procédé selon l'une des revendications précédentes, **caractérisé en ce que** la solution est purifiée mécaniquement des matières insolubles.

27. Procédé selon l'une des revendications précédentes, **caractérisé en ce qu'**un mélange de polymères contaminé par des polymères étrangers est dissous dans du solvant frais et est précipité à la température de précipitation sous cisaillement.

28. Procédé selon l'une des revendications précédentes, **caractérisé en ce que**, après une nouvelle purification, les divers mélanges de polymères sont à nouveau dissous et sont mis sous forme de poudre ayant un spectre de granulométrie voulu par précipitation conventionnelle avec un agent organique de précipitation.

29. Procédé selon l'une des revendications précédentes, **caractérisé en ce qu'**un solvant organique est utilisé.

30. Procédé selon l'une des revendications précédentes, **caractérisé en ce que** du white-spirit, de l'hexane, du Dekalin ou du xylène sont utilisés comme solvant.

31. Procédé selon l'une des revendications précédentes, **caractérisé en ce que** la température de dissolution du mélange solvant-matières plastiques est supérieure à 100°C et se situe en particulier à environ 120°C-180°C.

32. Procédé selon l'une des revendications précédentes, **caractérisé en ce qu'**une première température de précipitation se situe ente 85-130°C, une deuxième température de précipitation plus basse dans la gamme de 70-105°C et une troisième température de précipitation entre 50 et 80°C, les stades de précipitation étant réglés de façon que l'écart entre les diverses gammes de température de précipitation soit d'au moins 2°C, de préférence 5°C.

33. Procédé selon l'une des revendications précédentes, **caractérisé en ce que**, pour la précipitation sous cisaillement, la solution est conduite dans un intervalle de cisaillement d'un dispositif de cisaillement pour précipitation qui est disposé dans une cuve de précipitation.

34. Procédé selon l'une des revendications précédentes, **caractérisé en ce que**, pour la précipitation sous cisaillement, la solution est conduite dans une cuve de précipitation comportant un dispositif d'agitateurs multiétage à contrecourant, qui présente des bras d'agitateurs ayant un gradient de cisaillement suffisant pour produire un produit fibreux.

35. Procédé selon l'une des revendications précédentes, **caractérisé en ce que**, pour la précipitation sous cisaillement, une quantité suffisante refroidie de solution ou suspension provenant d'une cuve de précipitation est amenée dans un dispositif externe de cisaillement avec un intervalle de cisaillement réglable de façon discontinue ou continue et une vitesse périphérique réglable.

36. Procédé selon l'une des revendications précédentes, **caractérisé en ce qu'**un mélange ou une combinaison ou un ensemble de matières plastiques usagées avec d'autres matières plastiques sont utilisés comme matière de base.

37. Procédé selon l'une des revendications précédentes, **caractérisé en ce que** la matière de base est tout d'abord mise en combinaison avec un solvant préalable, dissoute à une température et une pression environnante élevées, et purifiée des composants insolubles, et **en ce qu'**ensuite le solvant est échangé.

38. Procédé selon la revendication 37, **caractérisé en ce que** la matière de base dissoute est purifiée par filtration, décantation ou centrifugation.

39. Procédé selon l'une des revendications précédentes, **caractérisé en ce qu'**avant la précipitation sous cisaillement, des additifs solubles dans les polymères ou bien miscibles avec ceux-ci sont ajoutés à la solution.
